Europäisches Patentamt

European Patent Office

Office européen des brevets

(11) Veröffentlichungsnummer: **0 000 870**
A1

(12) # EUROPÄISCHE PATENTANMELDUNG

(21) Anmeldenummer: **78100496.5**

(22) Anmeldetag: **25.07.78**

(51) Int. Cl.²: **C 01 B 33/28, C 11 D 3/12**

(30) Priorität: **24.08.77 DE 2738085**

(43) Veröffentlichungstag der Anmeldung: **07.03.79**
**Patentblatt 79/5**

(84) Benannte Vertragsstaaten: **BE CH DE FR GB NL SE**

(71) Anmelder: **Kali-Chemie Aktiengesellschaft,**
**Postfach 220, D-3000 Hannover 1 (DE)**

(72) Erfinder: **Walter, Ludwig, Dipl.-Chem. Dr., Auf dem**
**Plänzer 3, D-5462 Bad Hönningen (DE)**
Erfinder: **Rademacher, Theo, Plathnerstrasse 43,**
**D-3000 Hannover 1 (DE)**

(54) **Verfahren zur Verbesserung der Eigenschaften von Natriumaluminiumsilikatteigen und -pulvern.**

(57) Das beanspruchte Verfahren zur Verbesserung der
rheologischen Eigenschaften und des Redispergiervermögens von Natriumaluminiumsilikatteigen und -pulvern besteht darin, dem Teig 1–25 Gew.% $Na_2SO_4$ zuzusetzen, bezogen auf den Gesamtfeststoffgehalt nach Sulfat-Zusatz.

EP 0 000 870 A1

Verfahren zur Verbesserung der Eigenschaften
von Natriumaluminiumsilikatteigen und -pulvern

Die Herstellung von Aluminiumsilikaten der Zeolithtypen,
unter anderem auch des Typs A, durch Umsetzung einer wäßrigen Alkalisilikatlösung mit einer Alkalialuminatlösung
ist seit Jahren bekannt.

In neuerer Zeit erschließen sich dem Zeolith A weitere Anwendungsgebiete, wie z.B. als Builder in Waschmitteln.
Diese neue Anwendung bedingt zusätzliche Forderungen bezüglich der Eigenschaften des Produkts. So werden außer einem
hohen Erdalkalibindevermögen, hohem Weißgrad z.B. gewünscht
ein geringer mittlerer Teilchendurchmesser bei gleichzeitig
engem Kornspektrum. Dabei ist eine wichtige Forderung, daß
das Produkt, gleich in welcher Form es vorliegt, beim Dispergieren in Wasser wieder die ursprüngliche Verteilung
zeigt, daß es also keine irreversible Agglomeration aufweist.

Außerdem wird erwartet, daß das Natriumaluminiumsilikat in
Form des Filterteiges, der als solcher bei der Herstellung
von Waschmitteln eingesetzt werden kann, bestimmte im folgenden näher erläuterte Eigenschaften besitzt.

Der bei der Herstellung des Natriumaluminiumsilikats nach
der Abtrennung der Mutterlauge und aus der Waschung kommende anfallende Filterteig, der in der Regel 40 - 50 %
Feststoff enthält, zeigt neben anderen rheologischen
Anomalien eine starke Strukturviskosität. Diese ermöglicht
es im allgemeinen, den Teig im weiteren Arbeitsgang ohne
Verdünnen durch Pumpen zu fördern. Weiterhin kann der Teig
aufgrund der genannten rheologischen Eigenschaften im allgemeinen in geeigneten Behältern gelagert und von dort nach Aufwendung relativ geringer Energie durch Rühren, Rütteln oder Pumpensog wieder zum Fließen gebracht werden.

Der Ausdruck "im allgemeinen" soll besagen, daß die beschriebenen Fließeigenschaften in der überwiegenden Mehrzahl der Fälle anzutreffen sind. Für die Pumpbarkeit des Teiges nach Lagerung gilt dies insbesondere für einen Zeitraum bis zu 48 Stunden Lagerung. Bei längerer Lagerung tritt jedoch allmählich ein zäher Bodenkörper auf, der sich weder pumpen noch rühren läßt.

Es ist daher in der DOS 25 27 388 vorgeschlagen worden, zur Verbesserung der Suspensionsstabilität und der Pumpbarkeit Natriumaluminiumsilikatsuspensionen ein Dispergiermittel zuzusetzen, d.h. vornehmlich organische oberflächenaktive Substanzen oder quellfähige Tone, wie Bentonite u.a. Wie die in der DOS angegebenen Versuche zeigen, sind mit organischen oberflächenaktiven Substanzen stabilisierte Suspensionen nach 24 Stunden noch pumpfähig und weitgehend homogen. Eigene Versuche haben jedoch ergeben, daß sich bereits nach zwei Tagen ein Bodensatz bildet und nach drei Tagen ist die Suspension nicht mehr pumbar. Über die Stabilität von mit Bentoniten versetzten Suspensionen ist in der DOS nichts gesagt. Aufbereitete Tone haben außerdem den Nachteil, daß sie sehr sorgfältig von Eisen befreit werden müssen und beim Waschprozeß insofern stören, als sie beim Spülen nicht vollständig entfernt werden, so daß es zu Ablagerungen auf der Faser kommt, bis schließlich eine Verkrustung eintritt.

Es wurde nun gefunden, daß bei Anwesenheit von Natriumsulfat im Teig die beschriebenen Schwierigkeiten bei seiner Weiterverarbeitung behoben sind. Der Zusatz von Natriumsulfat hat nicht nur den Vorteil, daß damit ein preisgünstiger Bestandteil in die Natriumaluminiumsilikatsuspension eingeführt wird, der sowieso im Waschmittel vorhanden ist, er bewirkt außerdem noch, daß beim Dispergieren des getrockneten Produktes in Wasser das Natriumaluminiumsilikat wieder in seiner ursprünglichen Kornverteilung vorliegt.

Als zweckmäßige Form der weiteren Verarbeitung des Natriumaluminiumsilikatteiges wird normalerweise die Sprühtrocknung angewandt. Neben wesentlichen Vorteilen gegenüber anderen Arten der Trocknung bringt die Sprühtrocknung einen Nachteil mit sich: das Produkt fällt in Form von Prills an. Diese an sich erwünschte Eigenschaft führt jedoch dazu, daß sich beim Dispergieren in Wasser die ursprüngliche im Teig gegebene Kornverteilung nicht wieder mit hinreichender Sicherheit einstellt. Die Prills (30 - 80 $\mu$ mittlerer Durchmesser) zerfallen häufig nicht wieder vollständig in die ursprünglichen Primärteilchen der Feinheit von ca. 98 - 99 % $< 15\,\mu$ entsprechend 95 % $< 10\,\mu$. Diese Erscheinung wird durch den Natriumsulfatzusatz behoben.

Es war nicht zu erwarten, daß Natriumsulfat sich derart günstig auf die Eigenschaften von Natriumaluminiumsilikatsuspensionen auswirken würde. Der DOS 25 27 388 ist zu entnehmen, daß Natriumsulfat keinen stabilisierenden Effekt auf die Suspension habe. Zwar wird darauf hingewiesen, das im gewaschenen Filterteig noch vorhandene Natriumhydroxid durch Schwefelsäure zu neutralisieren, zusätzlich müsse der Suspension zur Erreichung des gewünschten Stabilitätsgrades jedoch noch die erforderliche Menge des Dispergiermittels zugegeben werden. Dabei wird empfohlen, die Neutralisation der Natronlauge zumindest teilweise mit einem Dispergiermittel mit Säurecharakter durchzuführen, um damit nicht stabilisierende Säuren wie Schwefelsäure zu ersetzen.

Bei Zusatz von Natriumsulfat behielt der Filterteig seine vorteilhafte Konsistenz bei, gegebenenfalls über die ge-

- 4 -                    0000870

samte Beobachtungsdauer von acht Wochen. Insbesondere trat
kein zäher, nicht pumpbarer, nicht rührbarer Bodenkörper
auf. Bereits ein Zusatz von 1 % $Na_2SO_4$, bezogen auf den
nach der Zugabe vorhandenen Feststoffteig, läßt schon einen
Effekt erkennen. Für die Praxis stellt ein Zusatz von 2 %
Natriumsulfat die untere Grenze dar. Mit zunehmender
$Na_2SO_4$- Konzentration steigt zunächst die Wirkung des Natriumsulfats an, so daß Zusätze von 2 - 10 % zur Verbesserung der rheologischen Eigenschaften zweckmäßig sind. Bei
einer Erhöhung des Zusatzes über 10 % hinaus bis zu 25 %,
bezogen auf den gesamten Feststoff, wurden keine Nachteile
in rheologischer Hinsicht festgestellt.

Für eine Verbesserung der Dispergierbarkeit des getrockneten Natriumaluminiumsilikats sind Zusätze von über 10 %,
vorzugsweise von 15 - 20 %, bezogen auf den gesamten vorhandenen Feststoff, erforderlich. Wird Filterteig mit
$Na_2SO_4$-Gehalten von mehr als 10 % bis zu ca. 25 %, bezogen
auf Feststoff, der Sprühtrocknung unterworfen, so zeigen
die entstandenen Trockenprodukte nach Dispergierung in Wasser bei der Korngrößenbestimmung eine weitgehende Angleichung an das ursprüngliche Kornspektrum.

Das Natriumsulfat kann in jeder Stufe des Herstellungsprozesses von Natriumaluminiumsilikaten zugesetzt werden, solange durch die Art der Zugabe das Natriumaluminiumsilikat
selbst nicht strukturell verändert wird. Weiterhin ist natürlich darauf zu achten, daß es bei einem nachfolgenden
Waschprozeß nicht wieder entfernt wird. So ist es z.B.
gleichgültig, ob das Natriumsulfat bereits bei einer Fällung des Natriumaluminiumsilikats zugegen ist, d.h. ob es
der Alkalisilikat- und/oder der Alkalialuminatlösung zugesetzt wird oder ob es während der anschließenden Temperphase zugefügt wird. Es kann auch dem gewaschenen Filterteig zugesetzt werden.

Das Natriumsulfat kann auch während des Waschprozesses, der zwecks Herabsetzung des pH-Wertes durchgeführt wird, dadurch eingebracht werden, daß man das Natriumhydroxid, das im Waschwasser, das zweckmäßig im Gegenstrom geführt wird, mit Schwefelsäure vollständig oder teilweise neutralisiert. Allerdings reicht in der Regel die auf diese Weise eingeführte Menge an Natriumsulfat zur Verbesserung der Eigenschaften von Natriumaluminiumsilikatteigen und -pulvern nicht aus und ein weiterer Zusatz von Natriumsulfat ist erforderlich. Auch wegen der genauen Dosierung des Natriumsulfats ist ein weiterer Zusatz in der Regel notwendig.

<u>Beispiel 1</u>

$4,46$ m$^3$ Natriumaluminatlösung der molaren Zusammensetzung Na$_2$O/Al$_2$O$_3$ = $6,2$ und H$_2$O/Na$_2$O = 28 wurden unter Rühren schnell mit $0,54$ m$^3$ gleichzeitig zulaufender Natriumsilikatlösung der molaren Zusammensetzung Na$_2$O/SiO$_2$ = $0,83$ und H$_2$O/Na$_2$O = $13,4$ gemischt. Die Mischung wurde 100 Minuten bei 90$^\circ$C gerührt, rasch abgekühlt, filtriert und bis pH $10,5$ gewaschen. Der Filterteig enthielt $40,2$ % Feststoff.

Ein Teil des Filterteigs blieb ohne Zusatz in einem 200 l-Gefäß (Füllhöhe 60 cm) stehen. Nach 24 Stunden war der Teig noch fließfähig, wie beim langsamen Neigen des Gefäßes um 45$^\circ$ erkennbar war. Mit einem langsam senkrecht eingeführten Stab (Durchmesser: 25 mm, flaches Ende) konnte keine Inhomogenität in der Beschaffenheit des Teigs festgestellt werden.

Nach 48 Stunden war eine 1 cm hohe klare Schicht über dem Teig erkennbar. Der Teig war jedoch noch fließfähig. Mit dem senkrecht eingeführten Stab wurde ein ca. 2 cm hoher Bodenkörper festgesellt, der zäher war als der übrige Teig.

Nach 72 Stunden war eine 8 cm hohe, klare überstehende Schicht über dem Teig und eine ebenfalls ca. 8 cm starke Bodenschicht feststellbar, die zäher war als der Teig. Der Teig war nicht mehr fließfähig.

Nach einer Woche war die klare überstehende Schicht auf 28 cm angewachsen. Beim Neigen des Gefäßes um $135^{\circ}$ lief die obere Hälfte des Teiges sofort in eine Vorlage ab, die Masse der Bodenschicht folgte innerhalb von 2 Stunden bis auf einen ca. 1 cm starken, am Boden haftenden Rückstand.

Von dem durch zweistündiges Rütteln homogenisierten und wieder fließfähig gemachten Teig mit einem Restwassergehalt von 19,6 % wurde eine Probe in einem Laborsprühtrockner getrocknet (Austrittstemperatur $110^{\circ}C$).

Die Korngrößenverteilung wurde nach Dispergieren in Wasser (10 g Produkt; 700 ml $H_2O$; 60 Min. Rühren mit 1000 UpM) nach der Methode von Andreasen vorgenommen.

Die Ergebnisse sind in der folgenden Tabelle 1 zusammengestellt.

**Tabelle 1**

| Korngröße | nach Sprühtrocknung | direkt aus Filterteig |
|---|---|---|
| $<15\,\mu$ | 81 % | 99 % |
| $<10\,\mu$ | 73 % | 96 - 97 % |
| $<1\,\mu$ | 5 % | 2 % |
| 50 % $\gtrless$ | $5,5\,\mu$ | $2,8\,\mu$ |

Der Vergleich der dispergierten Probe aus der Sprühtrocknung mit einer nicht getrockneten Probe zeigt die unbefriedigende Dispergierbarkeit des getrockneten Produkts. Die Vergleichsprobe aus dem Teig entspricht den Anforderungen der Waschmittelindustrie.


Beispiel 2

In einen anderen Teil des nach Beispiel 1 hergestellten Teigs wurden nach dem Auswaschen pro 1 kg Teig 10 g festes $Na_2SO_4$, entsprechend 2,4 % der dann im Teig vorhandenen Feststoffmenge, eingemischt. Der Teig wurde gleichfalls in ein 200 l-Gefäß bis zu einer Füllhöhe von 60 cm gegeben und wie im Beispiel 1 beobachtet. Die einfachen Teste, langsames Neigen des Behälters um 45$^{\circ}$, Einführen des Stabs, ergaben, daß nach 7 Tagen der Teig noch homogen war. Danach begannen sich allmählich die Erscheinungen zu zeigen, die bei einem Teig ohne $Na_2SO_4$- Zusatz auftraten.


Beispiel 3

In einem weiteren Teil des nach Beispiel 1 hergestellten Teiges wurden pro 1 kg Teig 45 g festes Natriumsulfat eingemischt, was ca. 10 % der nunmehr vorhandenen Feststoffmenge entsprach. Der Teig wurde, wie in den vorangehenden Beispielen beschrieben, bei Lagerung in einem 200 l-Gefäß (60 cm Füllhöhe) beobachtet.

Die oben beschriebenen Teste zeigten, daß erst nach ca. 4 Wochen ein Absetzen begann im Sinne der Bildung einer klaren überstehenden Schicht und eines dichteren Bodenkörpers. Dieser Bodenkörper floß jedoch auch nach 8wöchiger Lagerung bei Neigung des Gefäßes um 135$^{\circ}$ praktisch quantitativ sofort mit der Hauptmasse in die Vorlage, ohne daß ein Aufrühren erforderlich war.

Beispiel 4

In einen weiteren Teil des nach Beispiel 1 hergestellten Teigs wurde pro 1 kg Teig 100 g festes $Na_2SO_4$ eingemischt, was etwa 20 % der gesamten Feststoffmenge entsprach. Der Teig wurde bei Lagerung in dem 200 l-Gefäß mit einer Füllhöhe von 60 cm beobachtet. Bezüglich der Fließfähigkeit zeigte der Teig das gleiche Verhalten wie der im Beispiel 3.

Nach 4 Wochen Standzeit wurde eine Probe des homogenisierten Teigs in einem Laborsprühtrockner getrocknet. Vom getrockneten Produkt sowie direkt vom Teig ohne $Na_2SO_4$-Zusatz wurden die Korngrößenverteilungen nach Dispergierung in Wasser nach Andreasen bestimmt. Der Einfluß des Natriumsulfats auf Dichte und Viskosität des wäßrigen Mediums wurde berücksichtigt. Die Ergebnisse sind in Tabelle 2 wiedergegeben.

Tabelle 2

| Korngöße | nach Sprütrocknung | direkt aus Teig |
|---|---|---|
| $< 15 \mu$ | 97 % | 98 % |
| $< 10 \mu$ | 96 % | 96 % |
| $< 1 \mu$ | 2 % | 2 % |
| 50 % $\gtrless$ | 2,8 $\mu$ | 2,8 $\mu$ |

Aus der Tabelle ist zu ersehen, daß das getrocknete Produkt beim Dispergieren in Wasser praktisch wieder in die ursprünglichen Primärteilchen zerfällt.

Patentansprüche

1. Verfahren zur Verbesserung der Eigenschaften von Natriumaluminiumsilikatteigen und -pulvern, dadurch gekennzeichnet,
daß dem Teig 1 - 25 % $Na_2SO_4$, bezogen auf den gesamten nach
der Zugabe des $Na_2SO_4$ vorhandenen Feststoffes, zugesetzt
werden.

2. Verfahren zur Verbesserung der rheologischen Eigenschaften
eines Natriumaluminiumsilikatteigs nach Anspruch 1, dadurch
gekennzeichnet, daß dem Teig 2 - 10 % Natriumsulfat, bezogen auf den gesamten vorhandenen Feststoff, zugesetzt werden.

3. Verfahren zur Verbesserung der Dispergierbarkeit von Natriumaluminiumsilikatpulver, dadurch gekennzeichnet, daß
dem Natriumaluminiumsilikat bei seiner Herstellung vor
der Trocknung 15 - 20 % Natriumsulfat zugesetzt werden.

4. Verfahren nach den Ansprüchen 1 und 2, dadurch gekennzeichnet, daß das Natriumsulfat entweder einer oder beiden Reaktionslösungen vor der Fällung des Natriumaluminiumsilikats oder dem gewaschenen Filterteig zugesetzt wird.

5. Verfahren nach den Ansprüchen 1 - 3, dadurch gekennzeichnet,
daß das Natriumsulfat zumindest teilweise durch Verwendung
von mit Schwefelsäure neutralisiertem Waschwasser während
des Waschprozesses des ausgefällten Natriumaluminiumsilikats eingebracht wird.

# EUROPÄISCHER RECHERCHENBERICHT

**Europäisches Patentamt**

Nummer der Anmeldung
EP 78 10 0496

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 2 319 577 (HENKEL & DEGUSSA) <br><br> * Einziger Anspruch * <br><br>-- | 1,4 |
| | CHEMICAL ABSTRACTS, vol. 78, 1973 no. 10, 12 maart, ref. 63318r FRIEDRICH WOLF: "Hydrothermal synthesis of zeolitic molecular sieves in the presence of salts", page 334 & Z.Chem. 1972 12(11), 422-3 (Ger.). <br> * Ganze Zusammenfassung * <br><br>-- | 1,4 |
| | FR - A - 2 306 167 (DEGUSSA & HENKEL) <br><br> * Ansprüche 1,4,6,7,8 und Beispielen 10,11,12 * <br><br>-- | 1,5 |
| | FR - A - 2 340 128 (HENKEL & DEGUSSA) <br><br> * Ansprüche 18 und 20, Beispiel 2, Seite 19 * <br><br>-- | 1,5 |
| A | FR - A - 2 332 321 (MISUZAWA K.K.K.K.) <br><br> * Anspruch 28, Beispiel 10; Seite 67, Zeilen 28-31 und Seite 89: "Echantillon no. H12" * <br><br>---- | 1,5 |

**KLASSIFIKATION DER ANMELDUNG (Int.Cl.²)**

C 01 B 33/28
C 11 D 3/12

**RECHERCHIERTE SACHGEBIETE (Int.Cl.²)**

C 01 B 33/28

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 01-12-1978 | BREBION |

EPA form 1503.1   06.78